# EUROPÄISCHE PATENTANMELDUNG

(11) **EP 1 596 186 A2**
(43) Veröffentlichungstag der Anmeldung: **16.11.2005**
(21) Anmeldenummer: 05008585.1
(22) Anmeldetag: 20.04.2005
(51) Int. Cl.: G01N 21/90, B65G 29/00

(54) **Verfahren und Vorrichtung zur Inspektion von Werkstücken**

(30) Priorität: 15.05.2004 DE 102004024277
(71) Anmelder: SIG Technology Ltd., 8212 Neuhausen Rhine Falls (CH)
(72) Erfinder: Lewin, Frank, 22889 Wilstedt (DE); Linke, Michael, 22926 Ahrensburg (DE)
(74) Vertreter: Klickow, Hans-Henning

(57) **Zusammenfassung**

Das Verfahren und die Vorrichtung dienen zur Inspektion von Werkstücken. Die Werkstücke werden von einem rotierenden Transportrad an einer Inspektionskamera vorbeigeführt. Die von der Inspektionskamera bereitgestellten Informationen werden von einer Auswertungseinheit analysiert. Die Werkstücke werden von Tragarmen des Transportrades gehaltert, die relativ zueinander positionsveränderlich angeordnet sind. Die Positionsveränderung wird derart durchgeführt, daß die Werkstücke im Bereich der Inspektionskamera mit einer mittleren Geschwindigkeit bewegt werden, die geringer als eine mittlere Geschwindigkeit der Tragarme entlang ihres Umlaufweges ist.

## Beschreibung

Die Erfindung betrifft ein Verfahren zur Inspektion von Werkstücken, bei dem die Werkstücke von einem rotierenden Transportrad an einer Inspektionskamera vorbeigeführt werden und bei dem die von der Inspektionskamera bereitgestellten Informationen von einer Auswertungseinheit analysiert werden.

Die Erfindung betrifft darüber hinaus eine Vorrichtung zur Inspektion von Werkstücken, die ein rotationsfähiges Transportrad für die Werkstücke sowie eine Inspektionskamera aufweist, die mit einer Auswertungseinheit verbunden ist.

Derartige Verfahren und Vorrichtungen können beispielsweise für die Inspektion von Vorformlingen oder Flaschen im Bereich einer Vorrichtung zur blastechnischen Herstellung von Behältern eingesetzt werden.

Bei einer Behälterformung durch Blasdruckeinwirkung werden vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den vorformling zu Beginn des Blasvorganges.

Der grundsätzliche Aufbau einer Blasstation zur Behälterformung wird in der DE-OS 42 12 583 beschrieben. Möglichkeiten zur Temperierung der vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die bislang durchgeführten Verfahren zur Inspektion von Werkstücken unter Verwendung einer Inspektionskamera sind hinsichtlich der je Zeiteinheit durchführbaren Inspektionen erheblichen Einschränkungen unterworfen bzw. benötigen zur Erreichung einer hohen Durchsatzrate technisch sehr aufwendige Inspektionskameras. In Abhängigkeit von der Auflösung sowie der Verarbeitungsgeschwindigkeit der Inspektionskameras sowie der Leistungsfähigkeit der verwendeten Auswertungseinheit ist es erforderlich, das zu inspizierende Werkstück für eine vorgegebene Mindestzeit im Bereich der Inspektionskamera zu positionieren bzw. das Werkstück nur mit einer bestimmten Höchstgeschwindigkeit an der Inspektionskamera vorbeizuführen.

Aufgabe der vorliegenden Erfindung ist es, ein Verfahren der einleitend genannten Art derart zu verbessern, daß ohne Verminderung der Inspektionsqualität eine erhöhte Anzahl von Werkstücken je Zeiteinheit inspiziert werden kann.

Diese Aufgabe wird erfindungsgemäß dadurch gelöst, daß die Werkstücke von Tragarmen des Transportrades gehaltert werden, die relativ zueinander derart positionsveränderlich angeordnet sind, daß die Werkstücke im Bereich der Inspektionskamera mit einer mittleren Geschwindigkeit bewegt werden, die geringer als eine mittlere Geschwindigkeit der Tragarme entlang ihres Umlaufweges ist.

Weitere Aufgabe der vorliegenden Erfindung ist es, eine Vorrichtung der einleitend genannten Art derart zu konstruieren, daß eine Inspektionseinrichtung bereitgestellt wird, die sowohl eine hohe Inspektionsqualität als auch eine hohe Durchsatzrate aufweist.

Diese Aufgabe wird erfindungsgemäß dadurch gelöst, daß das Transportrad mit Tragarmen versehen ist, die relativ zueinander positionsveränderlich geführt sind und daß die Tragarme mit einer Bewegungsteuerung verbunden sind, die für von den Tragarmen gehalterte Tragelemente für die Werkstükke im Bereich der Inspektionskamera eine geringere Transportgeschwindigkeit als in mindestens einem weiteren Bereich des Transportweges der Tragelemente vorgibt.

Durch die Halterung der Werkstücke von Tragelementen, die ihrerseits von Tragarmen positioniert werden, ist es möglich, durch eine geeignete Bewegungsvorgabe für die Tragarme eine entlang des Transportweges der Werkstücke variierende Transportgeschwindigkeit vorzugeben. Insbesondere ist es möglich, die Werkstücke vor Erreichen der Inspektionskamera abzubremsen und nach einem Passieren der Inspektionskamera wieder zu beschleunigen. In Abhängigkeit von der konkret realisierten Bewegungssteuerung können die Werkstücke hierdurch kurzzeitig angehalten oder zumindest mit erheblich reduzierter Geschwindigkeit bewegt werden.

Durch die Vorgabe einer variablen Geschwindigkeit ist es möglich, trotz Verwendung vergleichsweise preiswerter Inspektionskameras eine sehr hohe Durchsatzrate an Werkstükken zu realisieren und gleichzeitig eine qualitativ hochwertige Inspektion der Werkstücke durchzuführen, die eine Aussonderung fehlerhafter Werkstücke sicherstellt.

Zur Verminderung einer Relativgeschwindigkeit zwischen den Werkstücken und der Inspektionskamera im Erfassungsbereich wird vorgeschlagen, daß die Werkstücke in Transportrichtung vor der Inspektionskamera abgebremst werden.

Eine einfache Ableitung der Positionierbewegung der Tragarme von einer Rotationsbewegung des Transportrades kann dadurch erfolgen, daß die Abbremsung der Werkstücke durch eine Schwenkbewegung der Tragarme durchgeführt wird.

Eine weitere Möglichkeit zur Verminderung der Transportgeschwindigkeit der Werkstücke besteht darin, daß die Abbremsung der Werkstücke durch ein Einteleskopieren der Tragarme durchgeführt wird.

Darüber hinaus ist auch daran gedacht, daß die Abbremsung der Werkstücke durch ein vertikales Verschwenken der Tragarme durchgeführt wird.

Ein Weitertransport von fehlerhaften Werkstücken kann dadurch verhindert werden, daß nach einer Erkennung von fehlerhaften Werkstücken durch die Auswertungseinheit eine Aussonderungseinheit aktiviert wird.

Eine hohe Reproduktionsgenauigkeit bei der Bewegungsdurchführung kann dadurch erreicht werden, daß die Tragarme von einer Kurvensteuerung positioniert werden.

Eine hohe Auflösung bei der optischen Informationserfassung kann dadurch gewährleistet werden, daß Bildinformationen der Werkstücke von einer CCD-Kamera erfaßt werden.

Eine hohe Auswertungsqualität wird dadurch unterstützt, daß im Bereich der Auswertungseinheit eine Bildverarbeitung durchgeführt wird.

Zu einer preiswerten Verfahrensdurchführung trägt es bei, daß eine Verarbeitung optischer Informationen unter Verwendung eines PC durchgeführt wird.

Eine weitere Verbesserung der Auswertungsqualität kann dadurch erfolgen, daß die Werkstücke im Bereich der Inspektionskamera beleuchtet werden.

Bei einer Inspektion von transparenten Werkstücken erweist es sich insbesondere als vorteilhaft, daß Schattenbildungen im Bereich der Werkstücke ausgewertet werden.

Gemäß eine bevorzugten Ausführungsform erfolgt die Anwendung des Verfahrens sowie ein Einsatz der Vorrichtung zur Inspektion von Werkstücken im Bereich einer Einrichtung zur Blasformung von Behältern. Es werden dabei gemäß einer Ausführungsvariante Vorformlinge vor ihrer Blasverformung optisch überprüft und fehlerhafte Vorformlinge werden ausgesondert. Gemäß einer weiteren Ausführungsvariante erfolgt eine optische Überwachung von blasgeformten Behältern nach ihrer Entnahme aus den Blasstationen.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität und
- Fig. 5: eine perspektivische Darstellung einer Inspektionskamera, die im Bereich eines mit Tragarmen versehenen Transportrades angeordnet ist.

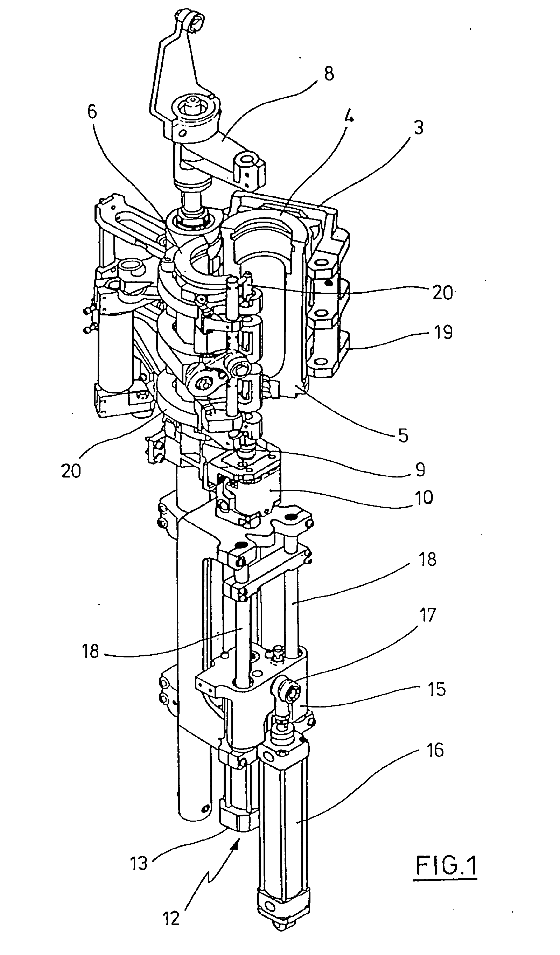

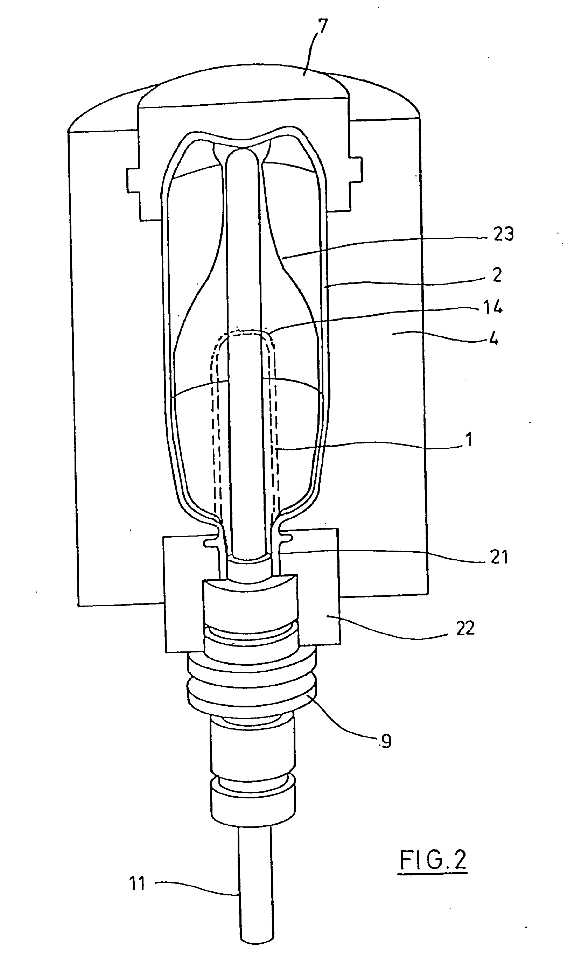

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

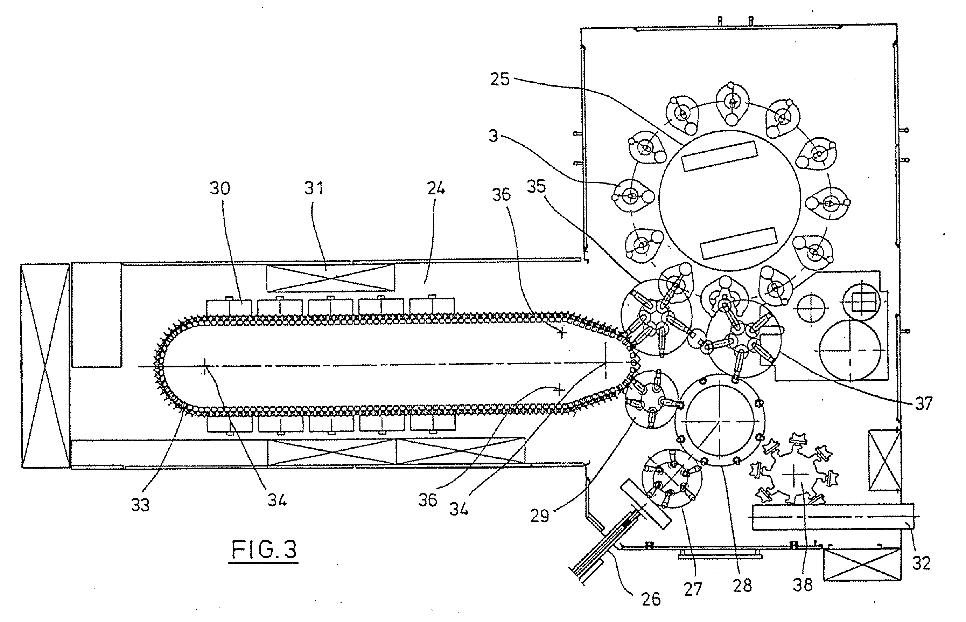

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

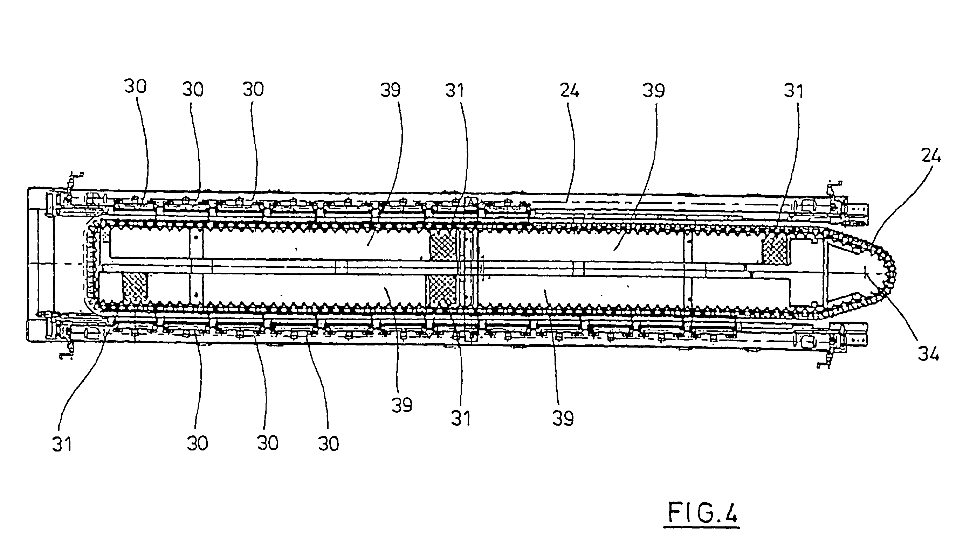

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

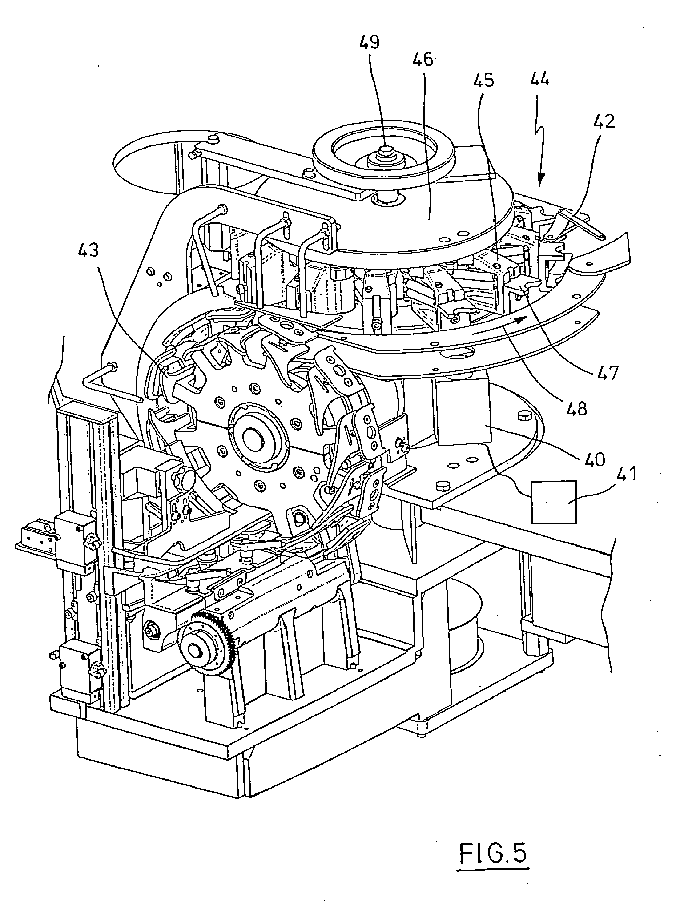

Fig. 5 zeigt eine im Bereich einer Vorrichtung zur Blasformung von Behältern (3) angeordnete Inspektionskamera (40). Die Inspektionskamera (40) ist an eine Auswertungseinheit angeschlossen, die eine Aussonderungseinheit (42) zur Aussonderung von als fehlerhaft erkannter nicht dargestellter Werkstücke ansteuert. Die als Vorformlinge (1) ausgebildeten Werkstücke werden der Vorrichtung zur Blasformung typischerweise entlang der in Fig. 3 dargestellten Vorformlingseingabe (26) mit dem Mündungsabschnitt (21) in lotrechter Richtung nach oben orientiert zugeführt und dann von einem Wenderad (43) gedreht und an ein Transportrad (44) übergeben, das bei der Ausführungsform gemäß Fig. 3 als Übergaberad (27) ausgebildet ist.

Das Transportrad (44) ist mit Tragarmen (45) versehen, die relativ zu einem Grundelement (46) des Transportrades (4) positionsveränderlich angeordnet sind. Aufgrund dieser positionsveränderlichen Anordnung der Tragarme (45) können die Tragarme (45) auch relativ zueinander ihre Positionierung verändern.

Beim dargestellten Ausführungsbeispiel sind die Tragarme (45) mit Tragelementen (47) für die Werkstücke versehen. Die Werkstücke können von den Tragelementen (47) direkt oder unter Zuhilfenahme von separaten Kopplungselementen transportiert werden.

Beim Ausführungsbeispiel gemäß Fig. 5 sind die Tragarme (45) in einer Umfangsrichtung (48) des Transportrades (44) relativ zum Transportrad (44) verschwenkbar angeordnet. Die Schwenkachsen der Tragarme (45) verlaufen hierbei im wesentlichen parallel zu einer Drehachse (49) des Transportrades (44).

Zur Durchführung der jeweiligen Positionierbewegungen der Tragarme (45) relativ zum Transportrad (45) wird vorzugsweise eine Kurvensteuerung verwendet. Die Tragarme sind hierzu mit Kurvenrollen ausgestattet, die entlang einer Kurvenbahn geführt werden. Durch die Bewegungsansteuerung der Tragarme (45) werden die Tragelement (47) und damit die Werkstücke in Umfangsrichtung (48) vor Erreichen der Inspektionskamera (45) abgebremst und nach einem Passieren der Inspektionskamera (45) wieder beschleunigt. In Umfangsrichtung (48) sind hierzu die Tragelemente (47) derart beabstandet angeordnet, daß ein entsprechender Freiraum für die durchzuführenden Brems- und Beschleunigungswege bereitgestellt ist.

Alternativ zu der in Fig. 5 dargestellten Verschwenkbarkeit der Tragarme (45) ist es auch denkbar, eine Verminderung der Umfangsgeschwindigkeit der Werkstücke durch ein Einteleskopieren oder Hochschwenken der Tragarme (45) durchzuführen. Gemäß einer weiteren alternativen Ausführungsform ist es auch möglich, eine geringe Relativgeschwindigkeit zwischen den Werkstücken und der Inspektionskamera (40) dadurch vorzugeben, daß die Inspektionskamera (40) auf einem umlaufenden rotierenden Träger angeordnet ist, dessen Umlaufweg sich mit dem Umlaufweg des Transportrades (44) derart überlegt, daß im Erfassungsbereich eine im wesentlichen gleiche Transportgeschwindigkeit und Transportrichtung der Werkstücke und der Inspektionskamera (40) realisiert sind.

## Patentansprüche

1. Verfahren zur Inspektion von Werkstücken, bei dem die Werkstücke von einem rotierenden Transportrad an einer Inspektionskamera vorbeigeführt werden und bei dem die von der Inspektionskamera bereitgestellten Informationen von einer Auswertungseinheit analysiert werden, **dadurch gekennzeichnet, daß** die Werkstücke von Tragarmen (45) des Transportrades (44) gehaltert werden, die relativ zueinander derart positionsveränderlich angeordnet sind, daß die Werkstücke im Bereich der Inspektionskamera (40) mit einer mittleren Geschwindigkeit bewegt werden, die geringer als eine mittlere Geschwindigkeit der Tragarme (45) entlang ihres Umlaufweges ist.

2. verfahren nach Anspruch 1, **dadurch gekennzeichnet, daß** die Werkstücke in Transportrichtung vor der Inspektionskamera (40) abgebremst werden.

3. Verfahren nach Anspruch 1 oder 2, **dadurch gekennzeichnet, daß** die Abbremsung der Werkstücke durch eine horizontale Schwenkbewegung der Tragarme (45) durchgeführt wird.

4. Verfahren nach Anspruch 1 oder 2, **dadurch gekennzeichnet, daß** die Abbremsung der Werkstücke durch ein Einteleskopieren der Tragarme (45) durchgeführt wird.

5. Verfahren nach Anspruch 1 oder 2, **dadurch gekennzeichnet, daß** die Abbremsung der Werkstücke durch ein vertikales Verschwenken der Tragarme (45) durchgeführt wird.

6. Verfahren nach einem der Ansprüche 1 bis 5, **dadurch gekennzeichnet, daß** nach einer Erkennung von fehlerhaften Werkstücken durch die Auswertungseinheit eine Aussonderungseinheit (42) aktiviert wird.

7. Verfahren nach einem der Ansprüche 1 bis 6, **dadurch gekennzeichnet, daß** die Tragarme (45) von einer Kurvensteuerung positioniert werden.

8. Verfahren nach einem der Ansprüche 1 bis 7, **dadurch gekennzeichnet, daß** Bildinformationen der Werkstücke von einer CCD-Kamera erfaßt werden.

9. Verfahren nach einem der Ansprüche 1 bis 8, **dadurch gekennzeichnet, daß** im Bereich der Auswertungseinheit eine Bildverarbeitung durchgeführt wird.

10. Verfahren nach einem der Ansprüche 1 bis 9, **dadurch gekennzeichnet, daß** eine Verarbeitung optischer Informationen unter Verwendung eines PC durchgeführt wird.

11. Verfahren nach einem der Ansprüche 1 bis 10, **dadurch gekennzeichnet, daß** die Werkstücke im Bereich der Inspektionskamera (40) beleuchtet werden.

12. Verfahren nach einem der Ansprüche 1 bis 11, **dadurch gekennzeichnet, daß** Schattenbildungen im Bereich der Werkstücke ausgewertet werden.

13. Vorrichtung zur Inspektion von Werkstücken, die ein rotationsfähiges Transportrad für die Werkstücke sowie eine Inspektionskamera aufweist, die mit einer Auswertungseinheit verbunden ist, **dadurch gekennzeichnet, daß** das Transportrad (44) mit Tragarmen (45) versehen ist, die relativ zueinander positionsveränderlich geführt sind und daß die Tragarme (45) mit einer Bewegungsteuerung verbunden sind, die für von den Tragarmen (45) gehalterte Tragelemente (47) für die Werkstücke im Bereich der Inspektionskamera (40) eine geringere Transportgeschwindigkeit als in mindestens einem weiteren Bereich des Transportweges der Tragelemente (47) vorgibt.

14. Vorrichtung nach Anspruch 13, **dadurch gekennzeichnet, daß** die Bewegungssteuerung sowohl zur Abbremsung als auch zur Beschleunigung der Tragarme (45) ausgebildet ist.

15. Vorrichtung nach Anspruch 13 oder 14, **dadurch gekennzeichnet, daß** die Bewegungsteuerung zur horizontalen Verschwenkung der Tragarme (45) ausgebildet ist.

16. Vorrichtung nach Anspruch 13 oder 14, **dadurch gekennzeichnet, daß** die Bewegungssteuerung zur Durchführung einer Teleskopierbewegung der Tragarme (45) ausgebildet ist.

17. Vorrichtung nach Anspruch 13 oder 14, **dadurch gekennzeichnet, daß** die Bewegungssteuerung zur vertikalen Verschwenkung der Tragarme (45) ausgebildet ist.

18. Vorrichtung nach einem der Ansprüche 13 bis 17, **dadurch gekennzeichnet, daß** die Auswertungseinheit mit einer Aussonderungseinheit (42) zur Aussonderung von fehlerhaften Werkstücken verbunden ist.

19. Vorrichtung nach einem der Ansprüche 13 bis 18, **dadurch gekennzeichnet, daß** die Bewegungssteuerung als eine Kurvensteuerung ausgebildet ist.

20. Vorrichtung nach einem der Ansprüche 13 bis 19, **dadurch gekennzeichnet, daß** die Inspektionskamera (40) als eine CCD-Kamera ausgebildet ist.

21. Vorrichtung nach einem der Ansprüche 13 bis 20, **dadurch gekennzeichnet, daß** die Auswertungseinheit (41) eine Bildverarbeitungseinrichtung umfaßt.

22. Vorrichtung nach einem der Ansprüche 13 bis 21, **dadurch gekennzeichnet, daß** die Auswertungseinheit mindestens zum Teil auf einem PC implementiert ist.

23. Vorrichtung nach einem der Ansprüche 13 bis 22, **dadurch gekennzeichnet, daß** im Bereich der Inspektionskamera (40) eine Beleuchtungseinrichtung für die Werkstücke angeordnet ist.

24. Vorrichtung nach einem der Ansprüche 13 bis 23, **dadurch gekennzeichnet, daß** die Auswertungseinheit (41) zur Auswertung einer Schattenbildung im Bereich der Werkstücke ausgebildet ist.

25. Vorrichtung nach einem der Ansprüche 13 bis 24, **dadurch gekennzeichnet, daß** die Inspektionskamera (40) und das Transportrad (44) im Bereich einer Einrichtung zur Blasformung von Behältern angeordnet sind, die mindestens eine Blaßstation (3) aufweist.
